# EUROPÄISCHE PATENTSCHRIFT

(11) **EP 3 722 123 B1**
(45) Veröffentlichungstag und Bekanntmachung des Hinweises auf die Patenterteilung: **01.06.2022**
(21) Anmeldenummer: 20161215.7
(22) Anmeldetag: 05.03.2020
(51) Int. Cl.: B60H 1/00, B62D 33/06, B60K 37/04, B60K 37/00

(54) **STEUERSTAND FÜR EIN MIT EINER KABINE AUSGESTATTETES FAHRZEUG**
STEERING POSITION FOR A MOTOR VEHICLE PROVIDED WITH A CABIN
POSTE DE COMMANDE POUR UN VÉHICULE DOTÉ D'UNE CABINE

(30) Priorität: 09.04.2019 AT 503092019
(43) Veröffentlichungstag der Anmeldung: 14.10.2020
(73) Patentinhaber: Wacker Neuson Linz GmbH, 4063 Hörsching (AT)
(72) Erfinder: Schauer, Markus, 4160 Aigen (AT); Mayr, Thomas, 4550 Kremsmünster (AT)
(74) Vertreter: Hübscher & Partner Patentanwälte GmbH

(56) Entgegenhaltungen:
- WO-A1-2007/063668
- WO-A1-2010/049358
- CN-A- 106 915 218
- JP-A- 2003 200 728

## Beschreibung

Die Erfindung bezieht sich auf eine Kabine für ein Arbeitsfahrzeug mit einem Steuerstand mit einer als Träger für Armaturen dienenden Kunststoffverkleidung und mit Luftleitungen zur Klimatisierung der Kabine.

Eine Kabine der geschilderten Art ist aus der WO 2007063668 A1 bekannt, wobei die Kabine von einer Mehrzahl von Stehern und Wandplatten gebildet und der Steuerstand in der Kabine angeordnet ist. Der Träger dient bei derzeitigen Lösungen der Verkleidung der Lenksäule und trägt diverse Armaturen insbesondere auf einem Armaturenbrett, wie Schalter, Anzeigeelemente u. dgl. ohne dabei selbst spezielle technische Funktionen zu übernehmen.

Zur Klimatisierung, also zum Umwälzen und/oder Zuführen von Luft, zum Kühlen bzw. Heizen der Luft, von Kabinen von Arbeitsmaschinen ist es bekannt geschweißte, aufwändig isolierte Blechkonsolen, mit teilweise sehr langen Ansaug- und/oder Ausblaskanälen vorzusehen. Diese Blechkonsolen sind meist im Motorraum verbaut, in dem naturgemäße erhöhte Umgebungstemperaturen vorherrschen, was nicht nur die langen Leitungen mit den damit verbundenen Strömungsverlusten bedingt, sondern wegen der hohen Temperaturen auch ungünstige Arbeitsbedingungen für ein Klimagerät zur Folge hat. Zudem haben derartige Lösungen einen hohen Platzbedarf im Motorraum. Durch die hohen Temperaturen im Motorraum ist zudem ein großer Aufwand hinsichtlich der thermischen Isolierung nötig. Bekannte nachrüstbare Aufdachlösungen verursachen hohe Kosten und erhöhen zudem die Maschinenhöhe.

Eine bekanntes Verfahren Hohlkörper aus Kunststoff zu fertigen ist das Rotationsformen, bzw. das Rotationsschmelzverfahren, bei dem eine Kunststoffschmelze an der Wandung eines rotierenden Werkzeuges abkühlt und erstarrt. Mit diesem Verfahren lassen sich mit einfachen Werkzeugen und niedrigen Werkzeugkosten kleine und mittlere Serien von Werkstücken mit verhältnismäßig großem Bauvolumen fertigen, wobei hinsichtlich der Formgebung große Freiheiten vorherrschen und Öffnungen beziehungsweise Durchbrüche mit durchgehenden Verbindungen, Gewinden, Einlageteilen usw. möglich sind.

Der Erfindung liegt somit die Aufgabe zugrunde, einen günstig herstellbaren Steuerstand der eingangs geschilderten Art zu schaffen, welcher in einfacher und vorteilhafter Weise eine Klimatisierung einer Kabine einer Arbeitsmaschine erlaubt.

Die Erfindung löst die gestellte Aufgabe dadurch, dass der Träger ein strukturelles Bauteil der Kabine ist und damit einen Teil der Kabineninnenwandung und der Kabinenaußenwandung einer Kabinenwand bildet und dass der Träger in Integralbauweise rotationsgeformt ist, wobei der Träger die Kabineninnenwandung und davon beabstandet die, einen muldenförmigen Aufnahmeraum für ein Klimaaggregat bildende, einstückig mit der Kabineninnenwandung geformte Kabinenaußenwandung umfasst und wobei wenigstens ein integral mitgeformter, eine Luftleitung bildender Durchlass zwischen Kabineninnenwandung und dem Aufnahmeraum der Kabinenaußenwandung vorgesehen ist.

Der erfindungsgemäße Steuerstand erlaubt in einfacher und vorteilhafter Weise eine Klimatisierung einer Kabine einer Arbeitsmaschine, da er sämtliche zur Klimatisierung erforderlichen Luftleitungen aufweist und derart ausgebildet ist, dass er ein Klimaaggregat aufnehmen kann, womit lange Leitungen entfallen können und Verluste geringgehalten werden. Integralbauweise bedeutet, dass der Träger aus einem einzigen Stück hergestellt, eben rotationsgeformt ist. Der Träger dient als strukturelles Bauteil der Kabine. Das bedeutet, der Träger bildet sowohl wenigstens einen Teil der Außen- als auch wenigstens einen Teil der Innenwandung des vorderen Teils der Kabine. Der Begriff strukturelles Bauteil ist nicht notwendiger Weise dahingehend zu verstehen, dass es sich um ein tragendes Bauteil handelt. In einer bevorzugten Ausführungsform ist der Träger als zumindest teilweise tragendes Bauteil ausgebildet. Auf das Trägerteil wird oben die Frontscheibe der Kabine aufgesetzt und können seitlich Türen angeschlagen sein. Die wenigstens eine integral mitgeformte, Luftleitung bildet einen Durchlass zwischen Kabineninnenwandung und dem Aufnahmeraum an der Kabinenaußenwandung, womit besonders kurze Strömungswege realisiert werden können. Der Trägerhohlraum kann gegebenenfalls thermisch bzw. akustisch gedämmt ausgeführt sein und/oder ebenfalls der Luftführung dienen.

Insbesondere umfasst der Träger wenigstens eine von der Kabineninnenwandung ausgehende Luftleitung für Umluft und wenigstens eine Luftleitung für Zuluft und ist der Kabinenaußenwandung wenigstens eine an den Aufnahmeraum angeschlossene Luftleitung für Frischluft zugeordnet. Ist zudem wenigstens eine Luftleitung zwischen Aufnahmeraum und einem der Kabineninnenwandung zugeordneten Armaturenträger vorgesehen, so sind alle Frischluft-, Umluft- und Ausblasluftleitungen im Träger ausgebildet bzw. vorgesehen. Zudem bietet der Träger Befestigungsmöglichkeiten für alle üblichen benötigten Fahrzeugarmaturen. Damit ist die gesamte Kabinen-Luftversorgung im Träger integriert und kann die Klimatisierung vom Motorraum entkoppelt werden.

Dies insbesondere, wenn in den Aufnahmeraum ein an die Luftleitungen angeschlossenes Klimaaggregat eingesetzt ist, das einen Luftverteiler, eine Heizung, eine Kühlung und eine Ventilationseinheit umfasst. Der Aufnahmeraum ist außenseitig vorzugsweise mit einem Aufnahmeraumdeckel abdeckbar. Damit ist das Klimaaggregat problemlos zwecks Wartung zugänglich. Dies bewirkt eine wesentliche Effizienzsteigerung des Luftdurchsatzes aufgrund besonders kurzer Luftkanäle gegenüber dem Stand der Technik. Zudem kann auf eine aufwändige zusätzliche thermische Isolierung verzichtet werden, was wesentlich geringere Herstell- und Montagekosten durch weniger Komponenten im Gesamtsystem zur Folge hat. Der damit gewonnene Platz im Motorraum kann anderweitig verwendet werden. Das Klimaaggregat umfasst nicht notwendigerweise alle Komponenten um beispielsweise die Kühlung der Kabine bereit zu stellen. Insbesondere ist zumindest ein Wärmetauscher im Aufnahmeraum angeordnet. Ein Klimakompressor und Kondensator können auch einer anderweitigen geeigneten Position angeordnet sein.

Um beispielsweise bei der Klimatisierung anfallendes Kondenswasser vorteilhaft aus dem Träger ableiten zu können, wird vorgeschlagen, dass der Aufnahmeraum bodenseitig einen, einen Abfluss für Kondenswasser bildenden und im Bereich der Kabinenaußenwandung ausmündenden Durchlass aufweist.

An die Luftleitungen können Abdeckgitter angesetzt sein, wobei den Abdeckgittern der Luftleitung für die Umluft und der Luftleitung für die Frischluft je wenigstens ein Luftfilter und wobei der wenigstens eine Luftleitung für die Zuluft eine einstellbare Düse zugeordnet ist. Damit sind am Träger alle erforderlichen Mittel zur ordentlichen Luftführung und zur Klimatisierung der Kabine vorgesehen.

Für eine kompakte Bauweise der Kabine ist es von Vorteil, wenn der Träger einen Durchlass für eine Lenksäule aufweist. Des Weiteren betrifft die Erfindung einen Steuerstand für eine Kabine und ein Arbeitsfahrzeug mit einer erfindungsgemäßen Kabine.

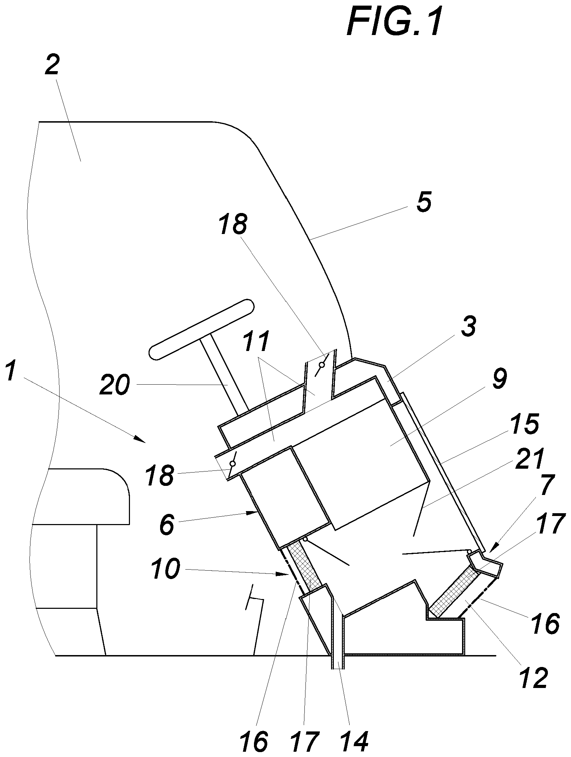

In der Zeichnung ist der Erfindungsgegenstand beispielsweise schematisch dargestellt. Es zeigen
Fig. 1 einen Steuerstand im Querschnitt,

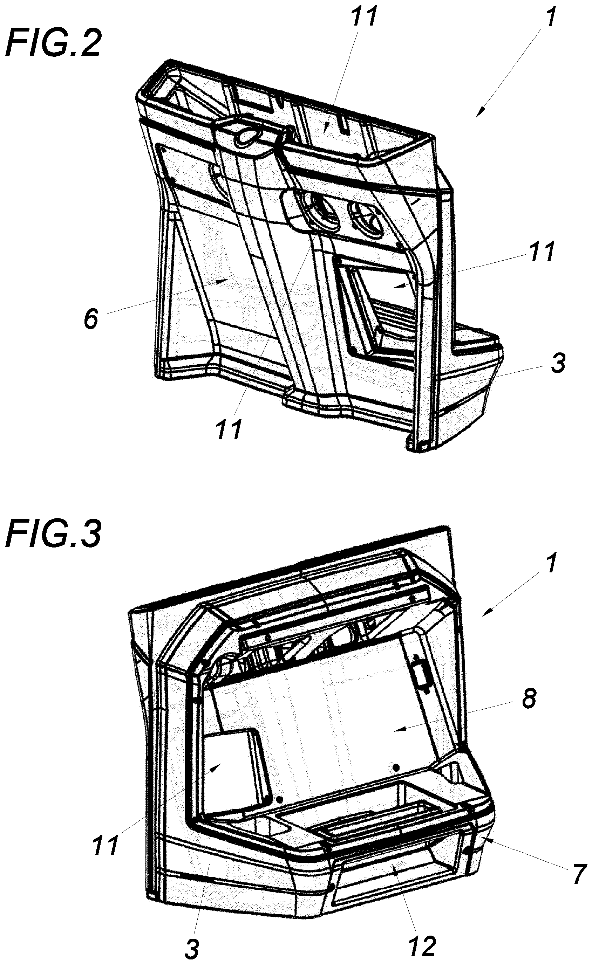

Fig. 2 einen Steuerstand von hinten schräg oben und
Fig. 3 den Steuerstand von vorne schräg oben.

Der Steuerstand 1 für ein mit einer Kabine 2 ausgestattetes, nicht näher dargestelltes, Arbeitsfahrzeug umfasst eine als Träger 3 für Armaturen 4 dienende Kunststoffverkleidung und Luftleitungen zur Klimatisierung der Kabine 2.

Der Träger 3 ist ein strukturelles Bauteil der Kabine 2 und trägt die Frontscheibe 5 der Kabine 2. Dies bedeutet, dass die Frontscheibe 5 oberhalb des Trägers 3 angeordnet ist, wobei diese nicht notwendigerweise mit ihrem Gewicht auf dem Träger 3 lasten muss. Zwischen dem Träger 3 und der Frontscheibe 5 kann eine Dichtung und/oder eine Blende oder Verkleidung angeordnet sein. Der Träger 3 bildet einen Teil der Kabineninnenwandung 6 und der Kabinenaußenwandung 7 einer Kabinenwand. Darüber hinaus ist der Träger 3 in Integralbauweise rotationsgeformt, wobei der Träger 3 die Kabineninnenwandung 6 und davon beabstandet die, einen muldenförmigen Aufnahmeraum 8 für ein Klimaaggregat 9 bildende, einstückig mit der Kabineninnenwandung 6 geformte Kabinenaußenwandung 7 umfasst. Zudem sind im Träger 3 integral mitgeformte, Luftleitungen 10, 11, 12 bildende Durchlässe zwischen Kabineninnenwandung 6 und dem Aufnahmeraum 8 der Kabinenaußenwandung 7 vorgesehen sind.

Die Kabineninnenwandung 6 umfasst wenigstens eine Luftleitung 10 für Umluft und wenigstens eine Luftleitung 11 für Zuluft. Der Kabinenaußenwandung 7 ist wenigstens eine an den Aufnahmeraum 8 angeschlossene Luftleitung 12 für Frischluft zugeordnet. Eine Luftleitung 11 ist zwischen Aufnahmeraum 8 und einem der Kabineninnenwandung 6 zugeordneten Armaturenträger 13 vorgesehen.

In den Aufnahmeraum 8 ist das an die Luftleitungen 10, 11, 12 angeschlossene Klimaaggregat 9 eingesetzt, das einen Luftverteiler, insbesondere eine Vorrichtung zum Umschalten zwischen Frischluftzufuhr und Umluft, eine Heizung, eine Kühlung und eine Ventilationseinheit umfasst. Da es sich dabei um eine Standardbaugruppe handelt ist diese nicht näher dargestellt.

Der Aufnahmeraum 8 weist bodenseitig einen, einen Abfluss 14 für Kondenswasser bildenden und im Bereich der Kabinenaußenwandung 7 ausmündenden Durchlass auf. Der Aufnahmeraum 8 der Kabinenaußenwandung 7 ist außenseitig mit einem Aufnahmeraumdeckel 15 abgedeckt. An die Luftleitungen 10, 11, 12 sind Abdeckgitter 16 angesetzt, wobei dem Abdeckgitter 16 der Luftleitung 10 für die Umluft und der Luftleitung 12 für die Frischluft je wenigstens ein Luftfilter 17 und wobei den Luftleitungen 11 für die Zuluft einstellbare Düsen 18 zugeordnet sind. Der Träger 3 weist einen Durchlass 19 für eine Lenksäule 20 auf.

Im vorderen, unteren Bereich der Kabinenaußenwandung 7 wird durch ein abnehmbares Abdeckgitter 16 die Außenluft durch den Luftfilter 17 gesaugt. Das nach unten laufende Regenwasser wird von einem Abweiser 21 abgeleitet, um den Luftfilter 17 vor Nässe zu schützen. Im Bereich der Pedale wird die Kabineninnenluft durch das abnehmbare Abdeckgitter 16 an der Kabineninnenwandung 7 durch den Luftfilter 17 gesaugt. Beide Luftfilter 17 sind durch Abnehmen der jeweiligen Abdeckgitter 16 zu wechseln.

Der aus einem normativ geforderten, optimierten Mengenverhältnis von Außen- und Innenluft bestehenden Luftstrom wird durch das im Träger 3 montierte Klimaaggregat 9 gesaugt. Das, durch den im Klimaaggregat 9 befindlichen Verdampfer, anfallende Kondenswasser wird durch Abweiser 21 von den Luftfiltern 17 ferngehalten und im Träger 3 gesammelt und durch den Abfluss 14 abgeführt.

Die Luft wird von der Ventilationseinheit durch den im Träger 3 integrierten Luftverteiler gedrückt und tritt je nach Einstellung der unterschiedlichen Düsen 18 an den entsprechenden Stellen aus.

Durch Abstimmung der Querschnitte im Luftverteiler wird eine optimale Luftverteilung im Fahrgastraum gewährleistet, dabei sind die Düsen 18 so angeordnet, dass die Glasscheiben in der Kabine möglichst schnell enteist und der Maschinenführer angeströmt wird.

## Patentansprüche

1. Kabine (2) für ein Arbeitsfahrzeug mit einem Steuerstand (1) mit einer als Träger (3) für Armaturen (4) dienenden Kunststoffverkleidung und mit Luftleitungen (10, 11) zur Klimatisierung der Kabine (2) , **dadurch gekennzeichnet, dass** der Träger (3) ein strukturelles Bauteil der Kabine (2) ist und damit einen Teil der Kabineninnenwandung (6) und der Kabinenaußenwandung (7) einer Kabinenwand bildet und dass der Träger (3) in Integralbauweise rotationsgeformt ist, wobei der Träger (3) die Kabineninnenwandung (6) und davon beabstandet die, einen muldenförmigen Aufnahmeraum für ein Klimaaggregat (9) bildende, einstückig mit der Kabineninnenwandung (6) geformte Kabinenaußenwandung (7) umfasst und wobei wenigstens ein integral mitgeformter, eine Luftleitung (10, 11) bildender Durchlass zwischen Kabineninnenwandung (6) und dem Aufnahmeraum der Kabinenaußenwandung (7) vorgesehen ist.

2. Kabine (2) nach Anspruch 1, **dadurch gekennzeichnet, dass** die Kabineninnenwandung (6) ausgehende Luftleitung (10) für Umluft und wenigstens eine Luftleitung (11) für Zuluft umfasst und dass der Kabinenaußenwandung (7) wenigstens eine an den Aufnahmeraum angeschlossene Luftleitung (12) für Frischluft zugeordnet ist.

3. Kabine (2) nach Anspruch 1 oder 2, **dadurch gekennzeichnet, dass** wenigstens eine Luftleitung (11) zwischen Aufnahmeraum (8) und einem der Kabineninnenwandung (6) zugeordneten Armaturenträger (13) vorgesehen ist.

4. Kabine (2) nach einem der Ansprüche 1 bis 3, **dadurch gekennzeichnet, dass** in den Aufnahmeraum ein an die Luftleitungen (10, 11, 12) angeschlossenes Klimaaggregat (9) eingesetzt ist, das einen Luftverteiler, eine Heizung, eine Kühlung und eine Ventilationseinheit umfasst.

5. Kabine (2) nach einem der Ansprüche 1 bis 4, **dadurch gekennzeichnet, dass** der Aufnahmeraum (8) bodenseitig einen, einen Abfluss (14) für Kondenswasser bildenden und im Bereich der Kabinenaußenwandung (7) ausmündenden Durchlass aufweist.

6. Kabine (2) nach einem der Ansprüche 1 bis 5, **dadurch gekennzeichnet, dass** der Aufnahmeraum (8) außenseitig mit einem Aufnahmeraumdeckel (15) abgedeckbar ist.

7. Kabine (2) nach einem der Ansprüche 2 bis 6, **dadurch gekennzeichnet, dass** an die Luftleitungen (10, 11, 12) Abdeckgitter (16) angesetzt sind, wobei den Abdeckgittern der Luftleitung (10) für die Umluft und der Luftleitung (12) für die Frischluft je wenigstens ein Luftfilter (17) und wobei der wenigstens eine Luftleitung (11) für die Zuluft eine einstellbare Düse (18) zugeordnet ist.

8. Kabine (2) nach einem der Ansprüche 1 bis 7, **dadurch gekennzeichnet, dass** der Träger (3) einen Durchlass (19) für eine Lenksäule (20) aufweist.

9. Steuerstand (1) für eine Kabine (2) nach einem der Ansprüche 1 bis 8.

10. Arbeitsfahrzeug mit einer Kabine (2) nach einem der Ansprüche 1 bis 8.

## Claims

1. Cabin (2) for a work vehicle with a control station (1) with a synthetic material casing, which serves as a support (3) for instruments (4), and with air ducts (10, 11) for air-conditioning of the cabin (2), **characterised in that** the support (3) is a structural component of the cabin (2) and therefore forms a part of the cabin internal cladding (6) and of the cabin external cladding (7) of a cabin wall, and that the support (3) is rotationally moulded as an integral construction, wherein the support (3) comprises the cabin internal cladding (6) and, spaced apart therefrom, the cabin external cladding (7), which forms a trough-shaped accommodating space for an air-conditioning assembly (9) and forms one piece with the cabin internal cladding (6), and wherein at least one integrally co-formed passage, forming an air duct (10, 11), is provided between the cabin internal cladding (6) and the accommodating space of the cabin external cladding (7).

2. Cabin (2) as claimed in claim 1, **characterised in that** the cabin internal cladding (6) comprises an out-going air duct (10) for circulating air and at least one air duct (11) for incoming air, and that the cabin external cladding (7) is allocated at least one air duct (12) for fresh air attached to the accommodating space.

3. Cabin (2) as claimed in claim 1 or 2, **characterised in that** at least one air duct (11) is provided between the accommodating space (8) and an instrument support (13) allocated to the cabin internal cladding (6).

4. Cabin (2) as claimed in any one of claims 1 to 3, **characterised in that** an air-conditioning assembly (9) attached to the air ducts (10, 11, 12) is inserted into the accommodating space and comprises an air diffuser, a heating device, a cooling device and a ventilation unit.

5. Cabin (2) as claimed in any one of claims 1 to 4, **characterised in that** the accommodating space (8), on its floor, comprises a passage forming an outflow (14) for condensed water and issuing in the region of the cabin external cladding (7).

6. Cabin (2) as claimed in any one of claims 1 to 5, **characterised in that** the accommodating space (8) can be covered on the outside by an accommodating space cover (15).

7. Cabin (2) as claimed in any one of claims 2 to 6, **characterised in that** covering grilles (16) are placed onto the air ducts (10, 11, 12), wherein the covering grilles of the air duct (10) for the circulating air and those of the air duct (12) for the fresh air are each allocated at least one air filter (17) and wherein the at least one air duct (11) for the incoming air is allocated an adjustable nozzle (18).

8. Cabin (2) as claimed in any one of claims 1 to 7, **characterised in that** the support (3) comprises a passage (19) for a steering column (20).

9. Control station (1) for a cabin (2) as claimed in any one of claims 1 to 8.

10. Work vehicle with a cabin (2) as claimed in any one of claims 1 to 8.

## Revendications

1. Cabine (2) pour un véhicule de travail munie d'un tableau de bord (1) avec un revêtement en plastique servant de support (3) pour des armatures (4) et avec des conduites d'air (10, 11) pour la climatisation de la cabine (2), **caractérisée en ce que** le support (3) est un élément structurel de la cabine (2) et fait donc partie de la paroi intérieure de cabine (6) et de la paroi extérieure de cabine (7) d'une cloison de la cabine et que le support (3) est fabriqué par rotomoulage intégral, dans laquelle le support (3) comprend la paroi intérieure de cabine (6) et, à distance de celle-ci, la paroi extérieure de cabine (7) formant un logement en forme de cuvette pour un climatiseur (9), constituée d'une pièce avec la paroi intérieure de cabine (6), et dans laquelle au moins un passage intégré formant une conduite d'air (10, 11) est prévu entre la paroi intérieure de cabine (6) et le logement de la paroi extérieure de cabine (7).

2. Cabine (2) selon la revendication 1, **caractérisée en ce que** la paroi intérieure de cabine (6) comprend une conduite d'air sortante (10) pour l'air ambiant et au moins une conduite d'air (11) pour l'air entrant et qu'à la paroi extérieure de cabine (7) est associée au moins une conduite d'air (12) pour l'air frais raccordée au logement.

3. Cabine (2) selon la revendication 1 ou 2, **caractérisée en ce qu'**au moins une conduite d'air (11) est prévue entre le logement (8) et un support d'armatures (13) associé à la paroi intérieure de cabine (6).

4. Cabine (2) selon une des revendications 1 à 3, **caractérisée en ce que** dans le logement est inséré un climatiseur (9) raccordé aux conduites d'air (10, 11, 12) qui comprend un diffuseur d'air, un chauffage, un refroidissement et une unité de ventilation.

5. Cabine (2) selon une des revendications 1 à 4, **caractérisée en ce que** le logement (8) présente du côté du fond un passage formant une évacuation (14) pour l'eau de condensation et débouchant dans la zone de la paroi extérieure de cabine (7).

6. Cabine (2) selon une des revendications 1 à 5, **caractérisée en ce que** le logement (8) peut être recouvert du côté extérieur par un capot de logement (15).

7. Cabine (2) selon une des revendications 2 à 6, **caractérisée en ce que** sur les conduites d'air (10, 11, 12) sont appliquées des grilles de couverture (16), dans laquelle à chacune des grilles de couverture de la conduite d'air (10) pour l'air ambiant et de la conduite d'air (12) pour l'air frais est associé au moins un filtre à air (17) et dans laquelle à l'au moins une conduite d'air (11) pour l'air entrant est associée une buse réglable (18).

8. Cabine (2) selon une des revendications 1 à 7, **caractérisée en ce que** le support (3) présente un passage (19) pour une colonne de direction (20).

9. Tableau de bord (1) pour une cabine (2) selon une des revendications 1 à 8.

10. Véhicule de travail avec une cabine (2) selon une des revendications 1 à 8.
